# EUROPÄISCHE PATENTSCHRIFT

(11) **EP 0 345 451 B1**
(45) Veröffentlichungstag und Bekanntmachung des Hinweises auf die Patenterteilung: **12.07.1995**
(21) Anmeldenummer: 89107366.0
(22) Anmeldetag: 24.04.1989
(51) Int. Cl.: F16D 25/12, B60T 11/16, B29D 31/00

(54) **Kolben-/Zylinderaggregat aus Kunststoff**
Plastic piston/cylinder assembly
Unité de piston/cylindre en plastique

(30) Priorität: 16.05.1988 DE 3816607; 16.05.1988 DE 3816609; 16.05.1988 DE 3816610
(43) Veröffentlichungstag der Anmeldung: 13.12.1989
(73) Patentinhaber: ITT Automotive Europe GmbH, 60488 Frankfurt (DE)
(72) Erfinder: Schonlau, Jürgen, D-6229 Walluf (DE); Birkenbach, Alfred, D-6234 Hattersheim 2 (DE); Harth, Ralf, D-6370 Oberursel (DE); Ritter, Wolfgang, D-6370 Oberursel (DE)

(56) Entgegenhaltungen:
- EP-A- 0 285 255
- WO-A-87/03344
- FR-A- 1 031 287
- GB-A- 2 146 082

## Beschreibung

Die Erfindung betrifft ein Kolben-/Zylinderaggregat aus Kunststoff für hydraulische Systeme, beispielsweise in Kraftfahrzeugen, gemäß dem Oberbegriff von Patentanspruch 1.

In der Deutschen Offenlegungsschrift 3149628.8 wird eine Kugelgelenkverbindung zwischen einer mit einem Kugelkopf versehenen Druckstange und einem Druckelement, insbesondere zwischen der Druckstange und einen Kolben, eines hydraulischen Bremsskraftverstärkers oder Geberzylinders, wobei die Druckstange verschwenkbar in eine Grundbohrung des Kolbens eingesetzt ist, und zwischen der Grundbohrung und dem Kugelkopf ein, den Kugelkopf teilweise umfassendes, Halteelement angeordnet ist, das gleichzeitig als Armierungselement dient, beschrieben.

In dieser Offenlegungsschrift wird vorgeschlagen, daß das Halteelement mehrere federnde Vorsprünge aufweist, von denen einige mit Abkröpfungen versehen sind, die die Kugel hintergreifen, während die anderen an der Wand der Grundbohrung mit Vorspannung anliegen.

Durch die Internationale Patentanmeldung WO-A-87/03344 ist ein Zylinder bekannt geworden, der in einem hydraulischen System eingesetzt wird und die Merkmale des Oberbegriffs von Patentanspruch 1 aufweist. Der Zylinder besteht aus zwei Teilen. Jedes Teil ist aus Kunststoff hergestellt. Ein Teil umfaßt eine äußere Schale, die eine Öffnung aufweist. Am gegenüberliegenden Ende ist eine Endwand vorgesehen. Das andere Teil umfaßt eine innere Hülse. Diese Hülse ist genau in der Schale eingepaßt. Sie erstreckt sich vom genannten offenen Ende zur genannten Endwand. Das Ende der genannten Hülse, das vom offenen Ende entfernt angeordnet ist, ist mit Abstand von der genannten Endwand lokalisiert. In der genannten Hülse ist eine zylindrische Bohrung angebracht. In der genannten Bohrung ist ein Kolben gleitend angeordnet. Der Kolben kann sich in Richtung auf die genannte Endwand und von der Endwand fort bewegen.

Der Kolben ist hohlzylindrisch ausgeführt und weist an seiner, der Endwand des Zylinders abgewandten Seite einen Boden auf, an dem eine Feder abgestützt ist, die in dem Kolben geführt wird. Die Feder ist andererseits an der Endwand des Zylinders abgestützt.

Es sind Dichtungsmittel vorgesehen, die sich an den Umfang des Kolbens legen. Die genannten Dichtungsmittel werden zwischen dem inneren Ende der genannten Hülse und der gegenüberliegenden Fläche der Schale gehalten. Zwischen der genannten Endwand und dem genannten Kolben ist ein Druckraum ausgebildet.

Das Kolben-/Zylinderaggregat des Standes der Technik weist eine einrastbare Verbindung zwischen den zwei aus Kunststoff bestehenden Teilen des Zylinders auf. Dies bedeutet, daß ihre relative axiale Lage zueinander beim Zusammenbau nicht frei eingestellt werden kann, was zu einer - je nach Fertigungstoleranzen der Kunststoffteile - zu großen bzw. zu kleinen Vorspannung der Dichtungselemente führen kann, die zwischen diesen Kunststoffteilen angeordnet sind.

Weiterhin wird der Kolben des nach dem Stand der Technik bekannten Kolben-/Zylinderaggregats in seiner von der Endwand entferntesten, zurückgestellten Position lediglich von einem der den Zylinder bildenden Kunststoffteile geführt, wodurch es bei einer Betätigung des Kolbens zu einem Zusammenstoß mit einer Kante des zweiten Kunststoffteils kommen kann, wenn diese nur geringfügig gegeneinander verkantet sind, was bei der Verwendung von Kunststoffmaterial durch konstruktive Maßnahmen unter vertretbarem Aufwand nicht ausgeschlossen werden kann.

Ein weiterer Nachteil des nach dem Stand der Technik bekannten Kolben-/Zylinderaggregats ist, daß die Feder zwar im Bereich des Kolbens sicher geführt ist, nicht aber im außerhalb des Kolbens liegenden Bereichs des Zylinders.

Der Erfindung liegt die Aufgabe zugrunde, die Nachteile der nach dem Stand der Technik bekannten Kolben-/Zylinderaggregate zu beheben.

Bei Kolben-/Zylinderaggregaten insbesondere bei Kupplungsgeberaggregaten kommt es oft zum unkontrollierbaren Überfahren der Dichtmanschette, die zur Abdichtung des Kolbens im Zylinder dient. Der Grund hierfür ist in vielen Fällen, daß die Manschette axiales Spiel hat. Es gehört zu der Aufgabe der Erfindung, eine sichere spielfreie Positionierung der Manschette zu erreichen.

Weiterhin soll es durch die Erfindung möglich werden, den Zylinder des Aggregats, falls er im Fahrgastraum eingebaut ist, vom Motorraum her an das hydraulische System anzuschließen.

Glasfaserverstärkter Kunststoff läßt sich nur mit Schwierigkeiten mechanisch bearbeiten. Er ist nicht schweißbar. Diese, vom Werkstoff her gegegebenen, Schwierigkeiten sollen durch das erfinderische Konstruktionsprinzip umgangen werden. Insbesondere soll erreicht werden, daß die durch den hohen Druck im Zylinder hervorgerufenen Kräfte einwandfrei über ein Kunststoffgewinde abgefangen werden können.

Die Herstellung und Montage des gesamten Kolben/Zylinderaggregats soll einfach sein. Insbesondere sollen gute Voraussetzungen für eine maschinelle und automatisierte Massenherstellung geschaffen werden.

Die Herstellung des Geberzylinders soll grundsätzlich kostengünstiger sein, als dies beim Stand der Technik der Fall ist. Der erfindungsgemäße Geberzylinder soll eine Konstruktion aufweisen, die montagefreundlich und insbesondere für eine kostengünstige Massenfertigung geeignet ist. Durch die Erfindung sollen Voraussetzungen für eine maschinelle Endmontage des Gesamtaggregats geschaffen werden.

Zur Lösung der gestellten Aufgabe wird erfindungsgemäß vorgeschlagen, daß der Kolben in jeder Betriebsstellung sowohl an der Innenwand des Gehäuses als auch an der Innenwand des Hohlzylinders anliegt. Er ist daher sowohl im Bereich seines Vorsprungs als auch im Bereich des Hohlzylinders geführt, ein Verkanten des Kolbens gegenüber dem Gehäuse ist somit ausgeschlossen.

Weiterhin wird erfindungsgemäß vorgeschlagen, daß der Kolben im Bereich seines in den Druckraum ragenden Endes mit einem Vorsprung ausgestattet ist, der in seiner, vorzugsweise leicht konisch ausgebildeten, Mantelfläche mindestens eine Längsnut aufweist, die im zurückgezogenen Zustand des Kolbens eine hydraulische Verbindung zwischen den Radialkanälen und dem Druckraum herstellt.

Weiterhin ist ein aus Kunststoff hergestellter Hohlzylinder (Buchse) zur Führung des Kunststoffkolbens vorgesehen ist, der im Kunststoffzylindergehäuse mittels eines, insbesondere während des Fertigungsvorgangs des Gehäuses entstandenen, Gewindes eindrehbar angeordnet ist und im montierten Zustand einen axialen Druck auf eine koaxial angeordnete Scheibe und eine koaxial angeordnete Manschette ausübt.

Zur Vereinfachung und Verbilligung zur Herstellung des Kolben-/Zylinderaggregats wird vorgeschlagen, daß das Gewinde während des Fertigungsverfahrens durch Ausspindeln eines Werkzeugs entstanden ist.

Eine besonders gedrängte und damit raumsparende Bauweise ergibt sich dadurch, daß die Scheibe mit radial angeordneten Druckmittelkanälen, insbesondere in Form von Nuten, versehen ist (Nutscheibe).

Zu diesem Zweck ist weiterhin vorgesehen, daß der Hohlzylinder und das Gehäuse des Aggregats in Bereich der Scheibe einen Ringkanal bilden, der die Radialkanäle der Scheibe mit dem am Druckmittelvorratsbehälter angeschlossenen Druckmittelzulaufkanal verbindet.

Ein einfacher und trotzdem funktionssicherer Aufbau eines Ausführungsbeispiels besteht darin, daß die Manschette als Ventil ausgebildet ist,
das beim Zurückziehen des Kolbens das Nachfließen von Druckmittel über die Längsnuten zuläßt und beim Vorfahren des Kolbens eine hydraulische Dichtung zwischen Kolben und Gehäuse bildet.

Die bisher bekannten Federn und Metallteile werden durch die Erfindung dadurch vermieden, daß die Manschette mit axial angeordneten Noppen versehen ist, die als Federelemente dienen, und die die Anordnung Manschette/Scheibe bei im Gehäuse eingedrehtem Hohlzylinder unter axialen Druck halten. Außerdem wird vorgeschlagen, daß die Manschette mit einer Dichtlippe versehen ist, die die Ventilfunktion ausübt.

Besondere Armierungsmittel zur Bildung eines Anschlags für den Kolben werden dadurch überflüssig, weil vorgesehen wird, daß der Hohlzylinder an seinem pedalseitigen Ende mit einem angeformten, sich insbesondere radial nach innen erstreckenden, Anschlag für den Kolben versehen ist.

In den Fällen, in denen der Geberzylinder im Fahrgastraum eingebaut wird, kann vorgesehen werden, daß ein als Rohrstück ausgebildeter Druckstutzen, der das Aggregat mit der zu den übrigen Komponenten des hydraulischen Systems führenden Druckmittelleitung verbindet, so ausgebildet, in einem Durchbruch der Motorraumspritzwand angeordnet ist und mit einer Bördelverschraubung versehen ist, daß der Zylinder des Aggregats vom Motorraum her anschließbar ist.

Eine weitere vorteilhafte Ausgestaltung des Erfindungsgegenstandes zeichnet sich dadurch aus, daß das kolbenseitige, radial vergrößerte Ende der Kolbenstange im Kunststoffkolben durch eine Hinterspritzung, vorzugsweise Hinterschneidung oder Hintergreifung, gesichert ist.

Eine besonders kostengünstige Montage des Kolben-/Zylinderaggregats wird dadurch erreicht, daß der Druckmittelabgang, der die hydraulische Verbindung zwischen dem Druckraum des Aggregats und den übrigen Komponenten des hydraulischen Systems darstellt, aus einem Rohr besteht, das im Bereich seines druckraumseitigen Endes aufgebördelt ist, und das im Bereich seines Austritts aus dem Zylinder in radialer Richtung mit mindestens einer Einquetschung in radialer Richtung versehen ist, die zu mindestens einer Ausbuchtung in dem nicht eingequetschten Bereich des Rohrumfangs führt, wobei die Einquetschung bei der Montage des Rohrs im Zylinder angebracht wird, daß die Aufbördelung zusammen mit der Ausbuchtung Mittel zur Befestigung des Rohrs im Zylinder sind.

Mit der Erfindung wird eine kostengünstige Herstellung erreicht. Die spanabhebende Bearbeitung wird erheblich reduziert. Das herkömmliche Schnüffelloch entfällt. Der erfindungsgemäße Geberzylinder ist sehr montagefreundlich, da Gehäuse und Kolben bei der Endmontage aus nur je einem Teil bestehen. Stützende Blechelemente werden vermieden. Mit der Erfindung wird erreicht, daß Duroplast für Geberzylinder einsetzbar geworden ist. Duroplast ist ein Kunststoff, der den hohen Temperaturen im Motorraum, in dem der Geberzylinder untergebracht ist, widersteht. Zur Festlegung des kugelförmigen Kopfs der Kolbenstange des Gegenstands der Erfindung werden keine Klipse und Federn, wie dies beim Stand der Technik der Fall ist, benötigt.

Weitere Einzelheiten der Erfindung sind der folgenden Beschreibung zweier Ausführungsbeispiele der Erfindung zu entnehmen. Die Ausführungsbeispiele werden anhand von Figuren erläutert.

Figur 1 zeigt in einen axialen Schnitt ein Kolben-/Zylinderaggregat.

Figur 2 zeigt in einem axialen Schnitt eine Nutscheibe.

Figur 3 zeigt eine Ansicht der Nutscheibe gemäß Figur 2 in Richtung des Pfeils III der Figur 2.

Figur 4 zeigt das Profil einer Nutmanschette.

Figur 5 zeigt eine Schnittdarstellung einer anderen Ausführung des Kolben-/Zylinderaggregats, wobei der Schnitt durch die Achse des Aggregats geführt wird.

Figur 6 zeigt eine Schnittdarstellung entsprechend der Schnittlinie II-II der Figur 5, und

Figur 7 zeigt eine Schnittdarstellung entsprechend der Schnittlinie III-III der Figur 5.

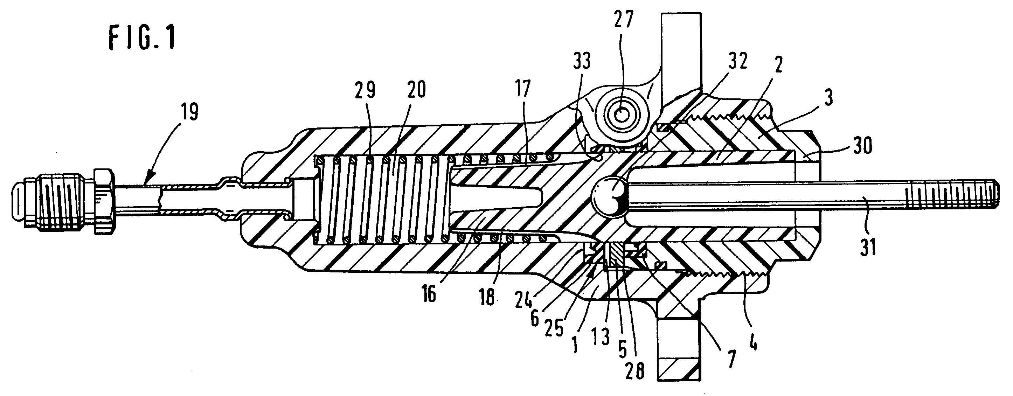

In Figur 1 ist ein Kolben-/Zylinderaggregat aus Kunststoff dargestellt, das als Geberaggregat für ein hydraulisches Kupplungsbetätigungssystem in einem Kraftfahrzeug dient.

Mit 1 ist das Kunststoffgehäuse bezeichnet. Der Kolben trägt die Bezugsziffer 2. Die Buchse 3 ist im Gehäuse 1 mittels eines Gewindes 4 eingedreht. Das Gewinde ist beim Herstellungsprozess (Kunststoffspritzverfahren) entstanden. Die Buchse dient zur Führung des Kolbens und sichert die Nutscheibe 5 und die Nutmanschette 6 in ihren, in Figur 1 gezeigten, Positionen. Mit 7 ist eine weitere Dichtungsmanschette bezeichnet. Die eingeschraubte Buchse garantiert eine Sicherung der Anordnung, bestehend aus Nutmanschette und Nutscheibe.

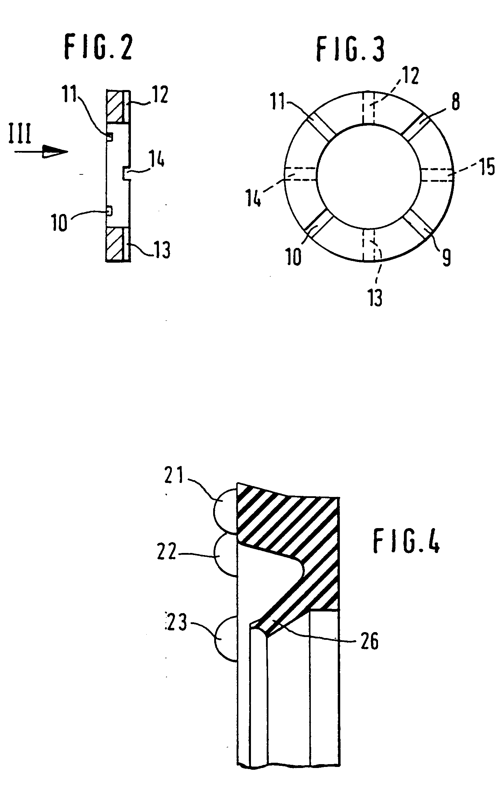

Einzelheiten der Nutscheibe sind den Figuren 2 und 3 zu entnehmen. Aus diesen Figuren, sind die radial angeordneten Kanäle 8, 9, 10, 11, 12, 13, 14, 15, beziehungsweise Nuten, erkennbar. Die radial angeordnete Nut 13 ist außerdem in Figur 1 gezeigt.

Der Kolben 2 ist mit einem druckraumseitigen Vorsprung 16 versehen, der Längsnuten 17, 18 aufweist. Am linken Ende des Gehäuses 1 der Figur 1 ist ein Druckstutzen 19 angeordnet, der den Druckraum 20 mit einer Druckmittelleitung verbindet. Diese Druckmittelleitung führt zum Nehmerzylinder der hydraulischen Kupplung.

Das besondere Profil der Nutmanschette 6 ist der Figur 4 zu entnehmen. Mit 21, 22, 23 sind dort Noppen bezeichnet, die sich in axiale Richtung erstrecken und, wie aus Figur 1 ersichtlich, an der Seitenwand 24 des Absatzes 25 anliegen. Die Noppen sind als Federelemente zu betrachten, welche die Anordnung, bestehend aus Nutmanschette und Nutscheibe, bei eingedrehter Buchse unter Spannung halten. Dadurch und durch die eingedrehte Buchse 3 wird eine spielfreie Positionierung von Nutmanschette und Nutscheibe gewährleistet.

Mit 26 ist in Figur 4 eine Dichtlippe bezeichnet, die eine Ventilfunktion ausführt, wie dies nachfolgend beschrieben wird.

Die Dichtlippe 26 ist der Mantelfläche des Kolbens benachbart angeordnet, während die Noppen im Bereich der radial außen liegenden Begrenzungfläche des Absatzes 25 angeordnet sind.

Bei der in Figur 1 dargestellten Situation kann Druckmittel vom nicht dargestellten Druckmittelvorratsbehälter über den Kanal 27 in den Ringraum oder Ringkanal 28 fließen. Dieser Ringkanal wird gebildet durch die Buchse 3, das Zylindergehäuse 1 und die Nutscheibe 5. Das im Ringkanal befindliche Druckmittel kann über die Radialkanäle 8 bis 15 in die Längsnuten 17, 18 gelangen. Von dort fließt das Druckmittel in den Druckraum 20.

Soweit die Situation, wie sie in Figur 1 dargestellt ist. In dieser Situation ist der Kolben nach rechts zurückgezogen und liegt unter dem Druck der Feder 29 am Anschlag 30, der an der Buchse 3 angeformt ist, an.

Bei Betätigung des Kupplungspedals wird über die Druckstange 31, die im Phenolharzkolben 2 schwenkbar eingespritzt ist und die eine Kugel 32 aufweist, welche fettbeschichtet ist, der Kolben 2 nach links bewegt. Die Kante 33 des Kolbens überfährt die Dichtlippe 26. Damit werden die Verbindungen zwischen den Radialkanälen 8 bis 15 und dem Druckraum 20 unterbrochen. Druck baut sich im Druckraum 20 auf. Die Dichtlippe 26 legt sich an die äußere Mantelfläche des Kolbens an. Die Nutmanschette mit ihrer Dichtlippe übernimmt nun als Ventil die Schließfunktion.

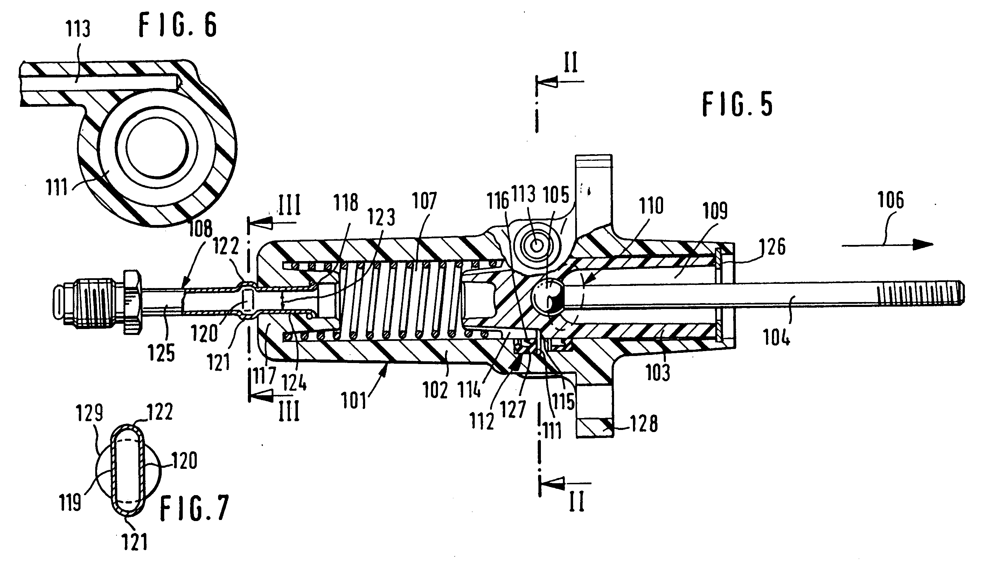

In Figur 5 ist ein aus Kunststoff bestehender Kupplungsgeberzylinder 101 eines Kraftfahrzeugs dargestellt, der ein Kunststoffgehäuse 102 aufweist. Im Gehäuse ist der aus Kunststoff hergestellte Kolben 103 geführt, der durch ein nicht dargestelltes Kupplungspedal bewegt werden kann. Die Kraft des Kupplungspedals wird über die Kolbenstange 104 auf den Kolben 103 übertragen. Die Kolbenstange 104 weist an ihrem linken Ende einen kugelförmigen Kopf 105 auf, der so mit Kunststoff umspritzt ist, daß eine Auszugskraft in Richtung des Pfeils 106 von der Kolbenstange 104 auf den Kolben 103 übertragen werden kann. Mit 107 ist der Druckraum bezeichnet. Der Druckmittelabgang trägt in seiner Gesamtheit die Bezugsziffer 108.

Die Herstellung des Kupplungsaggregats nach Figur 5 erfolgt in mehreren Schritten. In einer Spritzgußform, die der äußeren Form des Kolbens entspricht, werden Kolbenstange und ein Gußkern untergebracht. Der Gußkern nimmt den Bereich des Ringraums 109, der den linken Teil der Kolbenstange umhüllend angeordnet ist, ein. Kolbenstange und Gußkern werden mit Kunststoff umspritzt. Anschließend wird der Kern entfernt. Auf diese Weise erhält man eine im Bereich 110 eine Hinterspritzung beziehungsweise Hinterschneidung oder Hintergreifung des Kugelkopfes 5. Diese Hinterschneidung ist eine sichere Verbindung zwischen Kolbenstange und Kolben. Diese Verbindung ist so solide ausgeführt, daß sie die Übertragung der Auszugskraft von beispielsweise 100 kg zuläßt.

Zusätzliche sichernde und abstützende Metallteile, wie sie beim Stand der Technik zur Befestigung der Kolbenstange im Kunststoffkolben benutzt werden, sind bei dem erfindungsgemäßen Geberaggregat nicht notwendig.

Der Druckmittelabgang 108, siehe Figuren 5 und 7, besteht aus einem Rohr, das in der Wand 117 des Zylinders 102 untergebracht ist. Das Rohr weist ein aufgebördeltes Ende 118 auf. In Bezug auf die Wand 117 dem aufgebördelten Ende 118 gegenüberliegend sind zwei Einquetschungen angebracht. Die Lage der Einquetschung 119,120 ist aus Fig. 7 erkennbar. Durch die Einquetschungen werden Ausbuchtungen 121, 122 hervorgerufen, die den Durchmesser 123 der Öffnung 124 in der Wand 117 radial überragen. Die Ausbuchtungen 121,122 zusammen mit dem aufgebördelten Rohrende 118 übernehmen die Befestigung des Rohres 125 in der Wand 117 des Zylinders. Die ursprüngliche, das heißt vor dem Einquetschen, kreisrunde Mantellinie des Rohrs ist in Figur 7 gestrichelt dargestellt und mit 129 bezeichnet.

Die Montage des Rohrs erfolgt so, daß das Rohr 125 mit der Aufbördelung 118 von innen in die Öffnung 124 geschoben wird. Anschließend erfolgt außen die Einquetschung.

Mit 126 ist ein Seegerring bezeichnet, der den Kolben im Zylindergehäuse sichert.

Der Flansch 128 ist mit dem Pedalblock verbunden. Die Position der Spritzwand des Fahrzeugs kann je nach Forderung des Autoherstellers links vom Flansch, siehe Figur 5, angeordnet werden.
Dies ist von Vorteil, da dadurch dem Fahrzeughersteller Freiheit in der Anordnung der Spritzwand geboten wird.

### Bezugszeichenliste

- 1: Kunststoffgehäuse
- 2: Kolben
- 3: Buchse, Hohlzylinder
- 4: Gewinde
- 5: Scheibe
- 6: Manschette
- 7: Manschette
- 8: Kanal, Nut
- 9: Kanal, Nut
- 10: Kanal, Nut
- 11: Kanal, Nut
- 12: Kanal, Nut
- 13: Kanal, Nut
- 14: Kanal, Nut
- 15: Kanal, Nut
- 16: Vorsprung
- 17: Längsnut
- 18: Längsnut
- 19: Druckstutzen
- 20: Druckraum
- 21: Noppen
- 22: Noppen
- 23: Noppen
- 24: Seitenwand
- 25: Absatz
- 26: Dichtlippe
- 27: Kanal
- 28: Ringraum, Ringkanal
- 29: Feder
- 30: Anschlag
- 31: Druckstange
- 32: Kugel
- 33: Kante
- 101: Zylinder
- 102: Gehäuse
- 103: Kolben
- 104: Kolbenstange
- 105: Kopf
- 106: Pfeil
- 107: Druckraum
- 108: Abgang
- 109: Raum
- 110: Bereich
- 111: Einstcih
- 112: Primärnut
- 113: Kanal
- 114: Aussparung
- 115: Kante
- 116: Dichtlippe
- 117: Wand
- 118: Ende, Aufbördelung
- 119: Einquetschung
- 120: Einquetschung
- 121: Ausbuchtung
- 122: Ausbuchtung
- 123: Durchmesser
- 124: Öffnung
- 125: Rohr
- 126: Seegerring
- 127: Primärmanschette
- 128: Flansch
- 129: Mantellinie

## Patentansprüche

1. Kolben-/Zylinderaggregat aus Kunststoff für hydraulische Systeme, beispielsweise in Kraftfahrzeugen, wobei zur Führung eines aus Kunststoff bestehenden Kolbens (2) in einem Gehäuse (1) ein aus Kunststoff hergestellter Hohlzylinder (3) vorgesehen ist, der im montierten Zustand einen axialen Druck auf eine koaxial angeordnete Scheibe (5) und eine koaxial angeordnete Manschette (6) ausübt, wobei die Scheibe (5) mit radial angeordneten Druckmittelkanälen (8 bis 15) versehen ist und wobei Gehäuse (1) und Scheibe (5) einen Ringkanal (28) bilden, der die Druckmittelkanäle (8 bis 15) der Scheibe (5) mit einem Druckmittelzulaufkanal (27) verbindet und im Gehäuse (1) ein zylindrischer Druckraum (20) ausgebildet ist, der einerseits durch das Gehäuse (1) und andererseits vom Kolben (2) begrenzt wird, wobei der Kolben (2) im Bereich seines in den Druckraum (20) ragenden Endes mit einem Vorsprung (16) ausgestattet ist, dadurch **gekennzeichnet,** daß der Kolben (2) in jeder Betriebsstellung sowohl an der Innenwand des Gehäuses (1) als auch an der Innenwand des Hohlzylinders (3) anliegt.

2. Kolben-/Zylinderaggregat aus Kunststoff nach Anspruch 1, dadurch **gekennzeichnet,** daß der Vorsprung (16) in seiner leicht konisch ausgebildeten Mantelfläche mindestens eine Längsnut (17,18) aufweist und sich ins Innere einer im Druckraum (20) angeordneten Feder (29) erstreckt, die auf ihrer ganzen Länge an der Innenwand des zylindrischen Gehäuses (1) geführt wird.

3. Kolben-/Zylinderaggregat aus Kunststoff nach einem der vorhergehenden Ansprüche, dadurch **gekennzeichnet,** daß der Hohlzylinder (3) mittels eines Gewindes (4) im Gehäuse (20) eindrehbar angeordnet ist.

4. Kolben-/Zylinderaggregat nach einem der vorhergehenden Ansprüche, dadurch **gekennzeichnet,** daß das Gewinde (4) während des Fertigungsverfahrens durch Ausspindeln eines Werkzeugs entstanden ist.

5. Kolben-/Zylinderaggregat nach einem der vorhergehenden Ansprüche, dadurch **gekennzeichnet,** daß die Druckmittelkanäle (8 bis 15) in der Scheibe (5) in Form von Nuten ausgebildet sind.

6. Kolben-/Zylinderaggregat nach einem der vorhergehenden Ansprüche, dadurch **gekennzeichnet,** daß die Manschette (6) als Ventil ausgebildet ist, das beim Zurückziehen des Kolbens (2) das Nachfließen von Druckmittel über die Längsnuten (17,18) zuläßt und beim Vorfahren des Kolbens (2) eine hydraulische Dichtung zwischen Kolben (2) und Gehäuse (20) bildet.

7. Kolben-/Zylinderaggregat nach einem der vorhergehenden Ansprüche, dadurch **gekennzeichnet,** daß die Manschette (6) mit axial angeordneten Noppen (21,22,23) versehen ist, die als Federelemente dienen, und die die Anordnung: Manschette/Scheibe bei im Gehäuse (1) eingedrehtem Hohlzylinder (3) unter axialem Druck halten, und daß die Manschette (6) mit einer Dichtlippe (26) versehen ist, die die Ventilfunktion ausübt.

8. Kolben-/Zylinderaggregat nach einem der vorhergehenden Ansprüche, dadurch **gekennzeichnet,** daß der Hohlzylinder (3) an seinem pedalseitigen Ende mit einem angeformten, sich insbesondere radial nach innen erstreckenden Anschlag (30) für den Kolben (2) versehen ist.

9. Kolben-/Zylinderaggregat nach einem der vorhergehenden Ansprüche, welches als Geberaggregat eines hydraulischen Kupplungsbetätigungssystems eines Kraftfahrzeugs ausgebildet ist, **gekennzeichnet** durch folgende Merkmale:
- das Kunststoffgehäuse (1) ist im Fahrgastraum des Kraftfahrzeugs eingebaut,
- Fahrgastraum und Motorraum des Kraftfahrzeuges sind durch eine Motorraum-Spritzwand getrennt,
- der Druckraum (20) ist mit einem Druckstutzen (19) versehen,
- in der Motorraum-Spritzwand ist ein Durchbruch angeordnet,
- im Durchbruch ist der Druckstutzen (19) so angeordnet, daß er an im Motorraum befindlichen Komponenten des Kupplungsbetätigungssystems vom Motorraum her anschließbar ist.

10. Kolben-/Zylinderaggregat, nach einem der vorhergehenden Ansprüche, mit einer den Kolben betätigenden Kolbenstange dadurch **gekennzeichnet,** daß das kolbenseitige, radial vergrößerte Ende der Kolbenstange (104) im Kunststoffkolben (103) durch eine Hinterspritzung, vorzugsweise Hinterschneidung oder Hintergreifung, gesichert ist.

11. Kolben-/Zylinderaggregat, nach einem der vorangegangenen Ansprüche, dadurch **gekennzeichnet,** daß der Druckstutzen (19,108), der die hydraulische Verbindung zwischen dem Druckraum (20) des Aggregats und den übrigen Komponenten des hydraulischen Systems herstellt, aus einem Rohr (125) besteht, das im Bereich seines druckraumseitigen Endes aufgebördelt ist (Aufbördelung 118) ,und das im Bereich seines Austritts aus dem Zylinder in radialer Richtung mit mindestens einer Einquetschung (119,120) versehen ist, die mindestens einer Ausbuchtung (121,122) in dem nicht eingequetschten Bereich des Rohrumfangs führt, wobei die Einquetschung (119,120) bei der Montage des Rohrs (125) im Zylinder (101) angebracht wird und, daß die Aufbördelung (118) zusammen mit der Ausbuchtung (121,122) Mittel zur Befestigung des Rohrs (125) im Zylinder (101) sind.

12. Kolben-/Zylinderaggregat, nach einem der vorhergehenden Ansprüche, dadurch **gekennzeichnet,** daß das Kolbenzylinderaggregat aus glasfaserverstärktem Kunststoff ausgebildet ist.

## Claims

1. A piston-cylinder assembly of plastic material for hydraulic systems, for example in automotive vehicles, wherein for guiding a plastic piston (2) in a housing (1) a hollow cylinder (3) made of plastic material is provided which, in the mounted condition, exerts an axial pressure to a coaxially arranged disc (5) and a coaxially arranged cup (6), the disc (5) having radially arranged pressure fluid ducts (8 to 15), and the housing (1) and the disc (5) forming an annular duct (28) which interconnects the pressure fluid ducts (8 to 15) of the disc (5) and a pressure fluid supply duct (27), and the housing (1) accommodating a cylindrical pressure chamber (20) which is bounded by the housing (1), on the one hand, and the piston (2), on the other hand, the piston (2) being provided with a projection (16) in the area of its end projecting into the pressure chamber (20),
**characterized** in that the piston (2), in every operating position, abuts on the inside wall of the housing (1) and on the inside wall of the hollow cylinder (3).

2. A piston-cylinder assembly made of plastic material as claimed in claim 1,
**characterized** in that the projection (16) in its slightly conically shaped peripheral surface, has at least one longitudinal groove (17, 18) and extends into the inside of a spring (29) provided in the pressure chamber (20) and guided over its entire length on the inside wall of the cylindrical housing (1).

3. A piston-cylinder assembly made of plastic material as claimed in any one of the preceding claims,
**characterized** in that the hollow cylinder (3) is arranged so as to be screwed in by means of a thread (4) in the housing (20).

4. A piston-cylinder assembly as claimed in any one of the preceding claims,
**characterized** in that the thread (4) is provided during the manufacturing process by the spindling-out of a tool.

5. A piston-cylinder assembly as claimed in any one of the preceding claims,
**characterized** in that the pressure fluid ducts (8 to 15) in the disc (5) have the shape of grooves.

6. A piston-cylinder assembly as claimed in any one of the preceding claims,
**characterized** in that the cup (6) is provided as a valve permitting the intake of pressure fluid through the longitudinal grooves (17, 18) when the piston (2) is being retracted and establishing a hydraulic seal between the piston (2) and the housing (20) when the piston (2) is advancing.

7. A piston-cylinder assembly as claimed in any one of the preceding claims,
**characterized** in that the cup (6) is provided with axially arranged knobs (21, 22, 23) which serve as elastic elements and keep the cup-and-disc arrangement under axial pressure when the hollow cylinder (3) is screwed into the housing (1), and in that the cup (6) is furnished with a sealing lip (26) which exercises the valve function.

8. A piston-cylinder assembly as claimed in any one of the preceding claims,
**characterized** in that, at its pedal-side end, the hollow cylinder (3) is provided with a moulded, particularly radially inwardly extending stop (30) for the piston (2).

9. A piston-cylinder assembly as claimed in any one of the preceding claims, which is arranged as a master assembly of a hydraulic clutch actuating system of an automotive vehicle,
**characterized** by the following features:
- the plastic housing (1) is mounted in the passenger compartment of the automotive vehicle,
- passenger compartment and engine compartment of the automotive vehicle are isolated by an engine compartment splash shield,
- the pressure chamber (20) has a pressure nozzle (19),
- an opening is provided in the splash shield of the engine compartment,
- the pressure nozzle (19) is arranged in the opening so as to be connectible from the engine compartment to component parts of the clutch actuating system disposed in the engine compartment.

10. A piston-cylinder assembly as claimed in any one of the preceding claims, including a piston rod operating the piston,
**characterized** in that the piston-side, radially enlarged end of the piston rod (104) is secured within the plastic material piston (103) by a back injection, preferably by a back taper or back gripping.

11. A piston-cylinder assembly as claimed in any one of the preceding claims,
**characterized** in that the pressure nozzle (19, 108) which represents the hydraulic connection between the pressure chamber (20) of the assembly and the other components of the hydraulic system is formed by a pipe (125) which is flared in the range of its pressure chamber-side end (flaring 118) and is provided, in the range of its exit from the cylinder in a radial direction, with at least one pinching (119, 120) in a radial direction leading to at least one bulging (121, 122) in the unpinched range of the circumference of the pipe, the pinching (119, 120) being made during mounting of the pipe (125) within the cylinder (101), and in that the flaring (118) together with the bulging (121, 122) provide means for fixing the pipe (125) within the cylinder (101).

12. A piston-cylinder assembly as claimed in any one of the preceding claims,
**characterized** in that the piston-cylinder assembly is made of glass fibre reinforced plastic material.

## Revendications

1. Unité piston-cylindre en matière plastique pour systèmes hydrauliques, par exemple dans des véhicules automobiles, dans laquelle, pour guider un piston (2) en matière plastique dans un boîtier (1), il est prévu un cylindre creux (3), réalisé en matière plastique, qui, à l'état monté, exerce une pression axiale sur un disque (5) disposé suivant le même axe et sur une coupelle (6) disposée suivant le même axe, le disque (5) étant pourvu de conduits radiaux d'agent de pression (8 à 15) et le boîtier (1) et le disque (5) formant un conduit annulaire (28) qui fait communiquer les conduits d'agent de pression (8 à 15) du disque (5) avec un conduit d'amenée d'agent de pression (27), tandis qu'il est ménagé dans le boîtier (1) une chambre de pression (20) cylindrique, qui est délimitée d'une part par le boîtier (1) et d'autre part par le piston (2), et que ce piston (2) est pourvu d'une partie en saillie (16) dans la zone de son extrémité qui fait saillie dans la chambre de pression (20), caractérisée en ce que, dans chaque position de fonctionnement, le piston (2) est en appui aussi bien sur la paroi intérieure du boîtier (1) que sur la paroi intérieure du cylindre creux (3).

2. Unité piston-cylindre en matière plastique selon la revendication 1, caractérisée en ce que la partie en saillie (16) comporte au moins une rainure longitudinale (17, 18) dans sa surface périphérique qui a une forme légèrement conique et en ce qu'elle s'étend à l'intérieur d'un ressort (29) qui est disposé dans la chambre de pression (20) et qui, sur toute sa longueur, est guidé sur la paroi intérieure du boîtier cylindrique (1).

3. Unité piston-cylindre en matière plastique selon l'une des revendications précédentes, caractérisée en ce que le cylindre creux (3) est disposé de façon à pouvoir être enfoncé en le faisant tourner, grâce à la présence d'un filetage (4) dans le boîtier (20).

4. Unité piston-cylindre selon l'une des revendications précédentes, caractérisée en ce que le filetage (4) est formé au cours du procédé de fabrication au moyen d'une opération de traction d'un outil qui se déroule à la façon de l'action d'une broche.

5. Unité piston-cylindre selon l'une des revendications précédentes, caractérisée en ce que les conduits d'agent de pression (8 à 15) ménagés dans le disque (5) sont réalisés sous la forme de rainures.

6. Unité piston-cylindre selon l'une des revendications précédentes, caractérisée en ce que la coupelle (6) est réalisée à la façon d'un clapet. qui, lors du recul du piston (2), autorise le passage de l'agent de pression par les rainures longitudinales (17, 18) et, lors du mouvement d'avance du piston (2), forme une étanchéité hydraulique entre le piston (2) et le boîtier (20).

7. Unité piston-cylindre selon l'une des revendications précédentes, caractérisée en ce que la coupelle (6) est pourvue de bossages (21, 22, 23) disposés axialement qui servent d'éléments à action élastique et qui maintiennent sous une pression axiale l'agencement : coupelle/disque lorsque le cylindre creux (3) a été enfoncé par un mouvement de rotation dans le boîtier (1) et en ce que la coupelle (6) est pourvue d'une lèvre d'étanchéité (26) qui joue le rôle de clapet.

8. Unité piston-cylindre selon l'une des revendications précédentes, caractérisée en ce qu'à son extrémité située du côté de la pédale, le cylindre creux (3) est pourvu d'une butée (30) pour le piston (2) qui est réalisée au formage et qui est notamment orientée radialement vers l'intérieur.

9. Unité piston-cylindre selon l'une des revendications précédentes, qui est réalisée de façon à constituer une unité-générateur d'un système hydraulique d'actionnement d'embrayage d'un véhicule automobile, caractérisée par les particularités qui suivent :
- le boîtier (1) en matière plastique est monté dans l'habitacle du véhicule automobile,
- l'habitacle et le compartiment moteur du véhicule automobile sont séparés par un tablier de compartiment moteur,
- la chambre de pression (20) est pourvue d'un raccord de pression (19),
- un passage est ménagé dans le tablier de compartiment moteur,
- le raccord de pression (19) es disposé dans le passage de façon à pouvoir être raccordé à partir du compartiment moteur aux composants du système d'actionnement d'embrayage qui sont situés dna le compartiment moteur.

10. Unité piston-cylindre selon l'une des revendications précédentes, caractérisée en ce que l'extrémité radialement plus grande de la tige de piston (104) qui est située du côté du piston est immobilisée dans le piston en matière plastique (103) au moyen d'une injection par derrière, de préférence d'une contre-dépouille ou d'un accrochage par derrière.

11. Unité piston-cylindre selon l'une des revendications précédentes, caractérisée en ce que le raccord de pression (19, 108), qui réalise la communication hydraulique entre la chambre de pression (20) de l'unité et les autres composants du système hydraulique, est constitué d'un tube (125) sur lequel est formé un collet rabattu (collet rabattu 118) dans la zone de son extrémité située du côté de la chambre de pression et qui, dans la zone de sa sortie hors du cylindre, est pourvu, suivant la direction radiale, d'au moins une partie écrasée (119, 120) qui entraîne la formation d'au moins une partie renflée (121, 122) dans la zone non écrasée du contour périphérique du tube, la partie écrasée (119, 120) étant réalisée lors du montage du tube (125) dans le cylindre (101), et en ce que le bord rabattu (118) et la partie renflée (121, 122) forment ensemble des moyens de fixation du tube (125) dans le cylindre (101).

12. Unité piston-cylindre selon l'une des revendications précédentes caractérisée en ce que l'unité piston-cylindre est réalisée en matière plastique renforcée de fibres de verre.
